(19) Europäisches Patentamt
European Patent Office
Office européen des brevets

(11) **EP 2 449 435 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(21) Anmeldenummer: **10732332.1**

(22) Anmeldetag: **25.06.2010**

(51) Int Cl.:
***G05B 11/32*** *(2006.01)*

(86) Internationale Anmeldenummer:
**PCT/EP2010/059054**

(87) Internationale Veröffentlichungsnummer:
**WO 2011/000785 (06.01.2011 Gazette 2011/01)**

(54) **STEUEREINRICHTUNG FÜR EINE HYDRAULIKZYLINDEREINHEIT**

CONTROL DEVICE FOR A HYDRAULIC CYLINDER UNIT

DISPOSITIF DE COMMANDE POUR UNE UNITÉ DE CYLINDRE HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009 EP 09164543**

(43) Veröffentlichungstag der Anmeldung:
**09.05.2012 Patentblatt 2012/19**

(73) Patentinhaber: **Primetals Technologies Germany GmbH**
**91052 Erlangen (DE)**

(72) Erfinder:
• **TAUTZ, Wilfried**
**91301 Forchheim (DE)**
• **WOHLD, Dietrich**
**91462 Rauschenberg (DE)**

(74) Vertreter: **Metals@Linz**
**Primetals Technologies Austria GmbH**
**Turmstraße 44**
**4031 Linz (AT)**

(56) Entgegenhaltungen:
• **LIU Y ET AL: "Tracking of a Moving target by Combination of Force/Velocity Control Based on Vision for a Hydraulic Manipulator" MECHATRONICS AND AUTOMATION, 2007. ICMA 2007. INTERNATIONAL CONFERENCE ON, IEEE, PI, 1. August 2007 (2007-08-01), Seiten 3226-3231, XP031135274 ISBN: 978-1-4244-0827-6**

**Beschreibung**

Die vorliegende Erfindung betrifft eine Steuereinrichtung für eine Hydraulikzylindereinheit, wobei die Steuereinrichtung anhand eines Sollgeschwindigkeitssignals ein Signal ermittelt, das auf eine Ventilsteuereinheit wirkt, mittels derer die Hydraulikzylindereinheit verstellt wird.

Eine derartige Steuereinrichtung ist vom Ansatz her aus der DE 10 2007 050 892 A1 bekannt. Die bekannte Steuereinrichtung weist einen Positionsregler auf, dem eine Sollposition und eine Istposition vorgegeben werden. Das Ausgangssignal des Positionsreglers kann als Sollgeschwindigkeitssignal angesehen werden.

Hydraulikzylindereinheiten werden verwendet, um unter Last oder im lastfreien Zustand mechanische Bewegungen vorzunehmen. Sie werden in der Regel kraft- oder positionsgeregelt betrieben. In Einzelfällen erfolgt auch eine Geschwindigkeitsvorgabe ohne überlagerte Positionsregelung. Sowohl im kraftgeregelten Betrieb als auch im positionsgeregelten Betrieb als auch bei Vorgabe einer Sollgeschwindigkeit ohne überlagerte Positionsregelung werden möglichst kurze Reaktionszeiten angestrebt, um die Hydraulikzylindereinheit schnell in den gewünschten Zustand bringen zu können und Störungen schnell ausregeln zu können.

Die Hydraulikzylindereinheit wirkt über ein mechanisches System auf die eine von ihr zu verstellende Einrichtung. Das mechanische System umfasst zumindest den Kolben der Hydraulikzylindereinheit, gegebenenfalls auch weitere Einheiten, die zwischen dem Kolben der Hydraulikzylindereinheit und der zu verstellenden Einrichtung angeordnet sind. Das mechanische System bewirkt eine Eigenkraft, die es auf die Hydraulikzylindereinheit ausübt. Die Kolbenkraft ergibt sich aus den wirksamen Kolbenflächen und den wirksamen Drücken der Hydraulikzylindereinheit. Im statischen Zustand der Hydraulikzylindereinheit unterscheiden sich die Kolbenkraft und die auf die zu verstellende Einrichtung wirkende Istlastkraft um die Eigenkraft. Im dynamischen Zustand, also während die Hydraulikzylindereinheit verstellt wird, ist diese Beziehung auf Grund einer zusätzlich wirkenden Verstellkraft, welche die Beschleunigungs- und Reibungskräfte umfasst, jedoch nicht mehr erfüllt.

Die Aufgabe der vorliegenden Erfindung besteht darin, Möglichkeiten zu schaffen, mittels derer die Hydraulikzylindereinheit im positionsgeregelten Betrieb und bei Geschwindigkeitsvorgabe ohne überlagerte Positionsregelung mit hoher Dynamik verstellt werden kann.

Die Aufgabe wird durch eine Steuereinrichtung für eine Hydraulikzylindereinheit mit den Merkmalen des Anspruchs 1 gelöst. Vorteilhafte Ausgestaltungen der erfindungsgemäßen Steuereinrichtung sind Gegenstand der abhängigen Ansprüche 2 bis 10.

Erfindungsgemäß ist bei einer Steuereinrichtung für eine Hydraulikzylindereinheit vorgesehen,

- dass die Steuereinrichtung ein erstes und ein zweites Geschwindigkeitsfilter, einen Kraftregler und ein Verzögerungsglied umfasst,
- dass mittels des ersten Geschwindigkeitsfilters ein Sollgeschwindigkeitssignal zu einem gefilterten Geschwindigkeitssignal gefiltert wird,
- dass dem Kraftregler eine erwartete Verstellkraft, eine von der Hydraulikzylindereinheit auf ein von der Hydraulikzylindereinheit bewegtes mechanisches System ausgeübte Kolbenkraft und eine durch das mechanische System bewirkte Eigenkraft zugeführt werden,
- dass die erwartete Verstellkraft dadurch ermittelt wird, dass das Sollgeschwindigkeitssignal zunächst mittels des zweiten Geschwindigkeitsfilters gefiltert wird und sodann mittels des Verzögerungsgliedes verzögert wird,
- dass der Kraftregler anhand der erwarteten Verstellkraft, der Kolbenkraft und der Eigenkraft ein Kraftreglerausgangssignal ermittelt,
- dass das gefilterte Geschwindigkeitssignal und das Kraftreglerausgangssignal zu einem Summensignal summiert werden und
- dass das Summensignal auf eine Ventilsteuereinheit wirkt, mittels derer die Hydraulikzylindereinheit verstellt wird.

Wenn die Hydraulikzylindereinheit in einem relativ engen Verfahrbereich bewegt wird, ist die obenstehende Ausgestaltung völlig ausreichend. Wenn die Hydraulikzylindereinheit über einen großen Verfahrbereich bewegt wird, kann die Dynamik dadurch erheblich verbessert werden, dass die Steuereinrichtung eine Linearisierungseinheit aufweist, mittels derer das Summensignal vor dem Zuführen zur Ventilsteuereinheit linearisiert wird. Denn auf Grund der Linearisierungseinheit kann erreicht werden, dass die Dynamik der Hydraulikzylindereinheit stets unabhängig von der Arbeitsstellung der Hydraulikzylindereinheit in einem optimalen Bereich gehalten wird.

In manchen Fällen kann es ausreichen, die Linearisierungseinheit derart auszugestalten, dass sie eine sogenannte Schmetterlingskurve realisiert. Bevorzugt ist jedoch, die Linearisierungseinheit derart auszugestalten, wie es aus der

DE 10 2007 051 857 B3 bekannt ist.

Das Verzögerungsglied dient dazu, die Dynamik der Ventilsteuereinheit nachzubilden. In der Regel ist das Verzögerungsglied zu diesem Zweck als PT2-Glied (oder höher) ausgebildet.

Vorzugsweise ist der Kraftregler als Regler mit Differenzialverhalten ausgebildet, so dass das Kraftreglerausgangssignal im stationären Zustand der Hydraulikzylindereinheit zu Null wird. Als "Regler mit Differenzialverhalten" ist insbesondere ein reiner Differenzialregler anzusehen. Alternativ kann dem Differenzialregler ein Filterungs- und/oder Glättungsglied vorgeordnet sein. Alternativ oder zusätzlich zum Vorordnen des Filterungs- und/oder Glättungsgliedes kann auch eine Nachordnung vorgesehen sein.

Vorzugsweise weist das erste Geschwindigkeitsfilter eine Filtercharakteristik auf, die der Beziehung

$$\frac{vF}{vK*} = \frac{1 + a \cdot s + b \cdot s^2}{1 + c \cdot s + d \cdot s^2}$$

genügt, wobei vF das gefilterte Geschwindigkeitssignal ist, vK* das Sollgeschwindigkeitssignal ist, s der Laplace-Operator ist und a, b, c und d Parameter sind. Von der Dimension her gesehen ist das gefilterte Geschwindigkeitssignal vF weiterhin eine Geschwindigkeit.

Vorzugsweise weist weiterhin das zweite Geschwindigkeitsfilter eine Filtercharakteristik auf, die der Beziehung

$$\frac{F'}{vK*} = \frac{e + f \cdot s}{1 + g \cdot s + h \cdot s^2}$$

genügt, wobei F' das Ausgangssignal des zweiten Geschwindigkeitsfilters ist, vK* das Sollgeschwindigkeitssignal ist, s der Laplace-Operator ist und e, f, g und h Parameter sind. Von der Dimension her gesehen entspricht das Ausgangssignal des zweiten Geschwindigkeitsfilters einer Kraft.

Es ist möglich, dass das erste Geschwindigkeitsfilter und das zweite Geschwindigkeitsfilter vollständig getrennt sind. Alternativ ist es möglich, dass die beiden Geschwindigkeitsfilter gemeinsame Komponenten aufweisen.

In vielen Fällen ist das Sollgeschwindigkeitssignal eine translatorische Größe. Gleiches gilt in diesem Fall für die erwartete Verstellkraft, die Kolbenkraft und die Eigenkraft. Ebenso ist es jedoch alternativ möglich, dass es sich bei dem Sollgeschwindigkeitssignal um eine rotatorische Größe handelt. In diesem Fall sind die genannten Kräfte durch entsprechende Momente zu ersetzen.

In vielen Fällen umfasst die Steuereinrichtung zusätzlich zu den oben genannten Komponenten einen Positionsregler, dem eine von der Hydraulikzylindereinheit anzufahrende Sollposition und eine von der Hydraulikzylindereinheit angefahrene Istposition zugeführt werden. In diesem Fall ermittelt der Positionsregler anhand der Sollposition und der Istposition das Sollgeschwindigkeitssignal.

Im Falle der Ermittlung des Sollgeschwindigkeitssignals durch den Positionsregler umfasst das Sollgeschwindigkeitssignal vorzugsweise einen Proportionalanteil. Es kann sogar ausschließlich den Proportionalanteil aufweisen.

Es ist möglich, die erfindungsgemäße Steuereinrichtung schaltungstechnisch zu realisieren. Üblicherweise ist die Steuereinrichtung jedoch als softwareprogrammierbare Steuereinrichtung ausgebildet, die mit einem Softwaremodul programmiert ist. Das Softwaremodul umfasst von der Steuereinrichtung unmittelbar abarbeitbaren Maschinencode. Durch das Abarbeiten des Maschinencodes wird die Ausbildung der Steuereinrichtung als erfindungsgemäße Steuereinrichtung bewirkt. Die vorliegende Erfindung betrifft daher weiterhin ein Softwaremodul, das Maschinencode umfasst, der von einer an eine Hydraulikzylindereinheit angebundenen softwareprogrammierbaren Steuereinrichtung unmittelbar abarbeitbar ist und dessen Abarbeitung durch die Steuereinrichtung bewirkt, dass die Steuereinrichtung als erfindungsgemäße Steuereinrichtung ausgebildet ist.

Der Einsatz der erfindungsgemäßen Steuereinrichtung ist stets dann sinnvoll, wenn mittels der Hydraulikzylindereinheit eine weiche, nachgiebige Last verstellt werden soll oder die Hydraulikzylindereinheit im nahezu lastfreien Zustand verstellt werden soll. Ein Beispiel einer derartigen Anwendung ist das Anstellen eines Schlingenhebers eines Walzwerks an ein Band.

Die vorliegende Erfindung betrifft daher weiterhin die Verwendung einer mittels einer erfindungsgemäßen Steuereinrichtung gesteuerten Hydraulikzylindereinheit zur Steuerung eines Schlingenhebers eines Walzwerks.

Alternativ oder zusätzlich ist der Einsatz der erfindungsgemäßen Steuereinrichtung weiterhin sinnvoll, wenn die Hydraulikzylindereinheit als langhubige Hydraulikzylindereinheit ausgebildet ist, also als Hydraulikzylindereinheit, deren Hublänge größer als deren Kolbendurchmesser ist. Die vorliegende Erfindung betrifft daher auch die Verwendung einer erfindungsgemäßen Steuereinrichtung zur Steuerung einer derartigen Hydraulikzylindereinheit.

Weitere Vorteile und Einzelheiten ergeben sich aus der nachfolgenden Beschreibung eines Ausführungsbeispiels in Verbindung mit den Zeichnungen. Es zeigen in Prinzipdarstellung:

FIG 1    eine Hydraulikzylindereinheit mit Last,
FIG 2    eine erfindungsgemäße Steuereinrichtung und

FIG 3    eine Ausgestaltung der Steuereinrichtung von FIG 2.

Gemäß FIG ist eine Hydraulikzylindereinheit 1 vorzugsweise als langhubige Hydraulikzylindereinheit 1 ausgebildet. Eine langhubige Hydraulikzylindereinheit ist dadurch charakterisiert, dass sie einen Hub H aufweist, der größer als der Durchmesser D eines Kolbens 3 der Hydraulikzylindereinheit 1 ist.

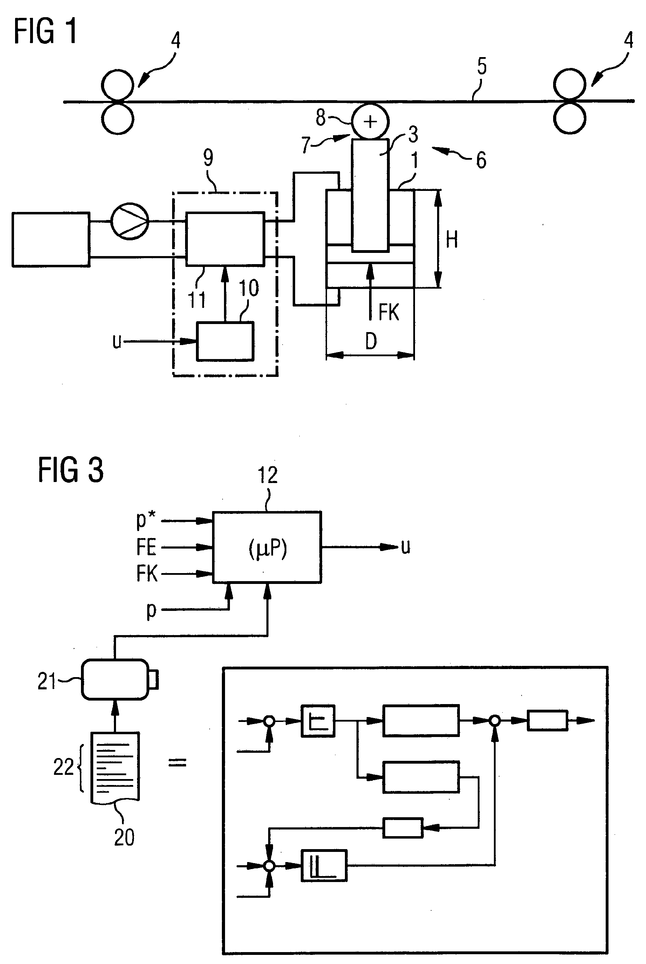

Die Hydraulikzylindereinheit 1 kann prinzipiell für beliebige Einsatzzwecke verwendet werden. Gemäß FIG 1 soll - rein beispielhaft - mittels der Hydraulikzylindereinheit 1 ein Schlingenheber 6 an ein zwischen zwei Walzgerüsten 4 eingespanntes Band 5 angestellt werden. FIG 1 zeigt den Zustand, in dem der Schlingenheber 6 das Band 5 gerade erreicht hat. Das Band 5 ist in der Regel ein Metallband, beispielsweise ein Stahl- oder Aluminiumband. Das Walzwerk ist in der Regel ein Warmwalzwerk.

Die obenstehend erläuterte Anwendung ist derzeit bevorzugt. Die vorliegende Erfindung ist jedoch nicht auf diese Anwendung beschränkt. Sie ist vielmehr universell einsetzbar.

Die Hydraulikzylindereinheit 1 wirkt auf ein mechanisches System 7. Das mechanische System 7 umfasst zumindest den Kolben 3 der Hydraulikzylindereinheit 1. Bei der - rein beispielhaften - Anwendung von FIG 1 umfasst das mechanische System 7 zusätzlich eine Rolle 8, die mittels der Hydraulikzylindereinheit 1 an das Band 5 angestellt wird.

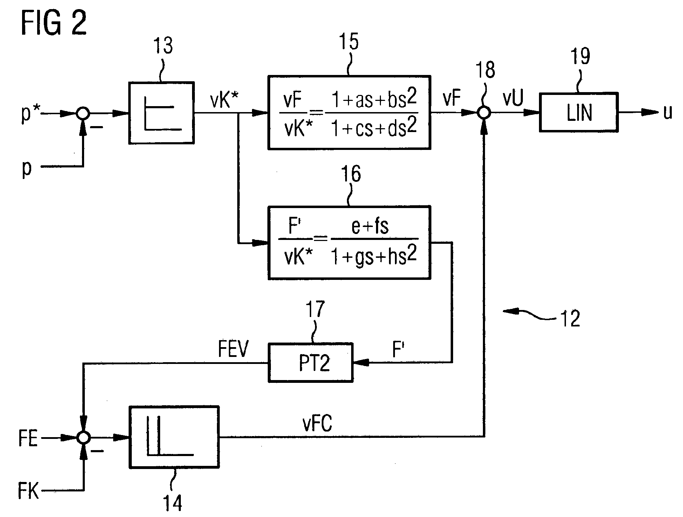

Die Hydraulikzylindereinheit 1 wird mittels einer Ventilsteuereinheit 9 verstellt. Die Ventilsteuereinheit 9 umfasst in der Regel einen Servoventilantrieb 10 und ein Servoventil 11. Das Servoventil 11 kann alternativ als Zweiwegeventil oder als vierwegeventil ausgebildet sein. Beide Ausgestaltungen sind Fachleuten allgemein bekannt und geläufig. Der Ventilsteuereinheit 9 wird ein Steuersignal u zugeführt, das von einer Steuereinrichtung 12 (siehe FIG 2) ermittelt wird. Der Steuereinrichtung 12 wird eine Sollposition p* vorgegeben, welche die Hydraulikzylindereinheit 1 annehmen soll. Der Aufbau und die Wirkungsweise der Steuereinrichtung 12 sind der Gegenstand der vorliegenden Erfindung. Sie werden nachfolgend in Verbindung mit FIG 2 erläutert.

Gemäß FIG 2 weist die erfindungsgemäße Steuereinrichtung einen Positionsregler 13, einen Kraftregler 14, ein erstes Geschwindigkeitsfilter 15, ein zweites Geschwindigkeitsfilter 16 und ein Verzögerungsglied 17 auf.

Dem Positionsregler 13 wird die Sollposition p* zugeführt. Die Sollposition p* ist diejenige Position, die von der Hydraulikzylindereinheit 1 angefahren werden soll. Dem Positionsregler 13 wird weiterhin eine Istposition p zugeführt. Die Istposition p ist diejenige Position, die von der Hydraulikzylindereinheit 1 angefahren ist. Der Positionsregler 13 ermittelt anhand der Sollposition p* und der Istposition p ein Sollgeschwindigkeitssignal vK*.

Das Sollgeschwindigkeitssignal vK* umfasst vorzugsweise einen Proportionalanteil, also einen Anteil, der proportional zur Differenz der Sollposition p* und der Istposition p ist. Es ist möglich, dass das Sollgeschwindigkeitssignal vK* ausschließlich den Proportionalanteil aufweist. Alternativ kann das Sollgeschwindigkeitssignal vK* zusätzlich einen Integralanteil und/oder einen Differenzialanteil umfassen.

Das Sollgeschwindigkeitssignal vK* wird dem ersten Geschwindigkeitsfilter 15 zugeführt. Mittels des ersten Geschwindigkeitsfilters 15 wird das Sollgeschwindigkeitssignal vK* zu einem gefilterten Geschwindigkeitssignal vF gefiltert. Das erste Geschwindigkeitsfilter 15 ist insbesondere so ausgelegt, dass Eigenschwingungen des Hydrauliksystems möglichst wenig angeregt werden. Es weist in der Regel intern ein nicht dargestelltes PT2-Glied auf und berücksichtigt weiterhin die erforderlichen Beschleunigungs- und Reibungsanteile, die in der Hydraulikzylindereinheit 1 auftreten.

Eine Filtercharakteristik des ersten Geschwindigkeitsfilters 15 kann nach Bedarf ausgelegt sein. In Versuchen hat es sich als vorteilhaft erwiesen, wenn das erste Geschwindigkeitsfilter 15 eine Filtercharakteristik aufweist, die der Beziehung

$$\frac{vF}{vK*} \equiv \frac{1 + a \cdot s + b \cdot s^2}{1 + c \cdot s + d \cdot s^2}$$

genügt. In der oben genannten Formel ist s der Laplace-Operator. a, b, c und d sind Parameter.

Das gefilterte Geschwindigkeitssignal vF wird einem Knotenpunkt 18 zugeführt, dem weiterhin ein Kraftreglerausgangssignal vFC zugeführt wird. Das gefilterte Geschwindigkeitssignal vF und das Kraftreglerausgangssignal vFC werden im Knotenpunkt 18 zu einem Summensignal vU summiert. Das Summensignal vU wirkt auf die Ventilsteuereinheit 9, mittels derer die Hydraulikzylindereinheit 1 verstellt wird.

Es ist möglich, das Summensignal vU der Ventilsteuereinheit 9 direkt zuzuführen. In diesem Fall ist das Steuersignal u mit dem Summensignal vU identisch. In vielen Fällen wird jedoch das Summensignal vU einer Linearisierungseinheit 19 zugeführt, die das Summensignal vU linearisiert. In diesem Fall entspricht das Steuersignal u dem von der Linearisierungseinheit 19 ermittelten Signal.

Die Linearisierungseinheit 19 ist der Ventilsteuereinheit 9 unmittelbar vorgeordnet. Sie kompensiert Nichtlinearitäten des Hydrauliksystems. Die Linearisierungseinheit 19 kann nach Bedarf ausgebildet sein. Derzeit ist bevorzugt, die Linearisierungseinheit 19 so auszubilden, wie es in der DE 10 2007 051 857 B3 ausführlich beschrieben ist.

Dem Kraftregler 14 werden eine erwartete Verstellkraft FEV, eine Kolbenkraft FK und eine Eigenkraft FE zugeführt. Die Kolbenkraft FK ist diejenige Kraft, die von der Hydraulikzylindereinheit 1 auf das mechanische System 7 ausgeübt wird. Sie ergibt sich in allgemein bekannter weise durch die wirksamen Kolbenflächen des Kolbens 3 und die auf die wirksamen Flächen wirkenden Drücke. Die Eigenkraft FE berücksichtigt insbesondere die Gewichtskraft, welche das mechanische System 7 - gemäß Ausführungsbeispiel also der Kolben 3 und die Rolle 8 - bewirkt. Der Kraftregler 14 ermittelt anhand der erwarteten Verstellkraft FEV, der Kolbenkraft FK und der Eigenkraft FE das Kraftreglerausgangssignal vFC.

Der Kraftregler 14 stabilisiert das Hydrauliksystem. Er ist vorzugsweise als Regler mit Differenzialverhalten ausgebildet, so dass das Kraftausgangssignal vFC im stationären Zustand der Hydraulikzylindereinheit 1 zu Null wird.

Die erwartete Verstellkraft FEV ist diejenige Kraft, die auf Grund von Reibungskräften und Beschleunigungen erwartet wird. Sie wird dadurch ermittelt, dass das Sollgeschwindigkeitssignal vK* zunächst mittels des zweiten Geschwindigkeitsfilters 16 gefiltert wird und sodann mittels des Verzögerungsgliedes 17 verzögert wird. Das zweite Geschwindigkeitsfilter 16 liefert als Ausgangssignal die Summe aus Beschleunigungskraft und Reibungskraft. Eine Filtercharakteristik, die das zweite Geschwindigkeitsfilter 16 aufweist, kann zu diesem Zweck nach Bedarf ausgebildet sein. In Versuchen hat es sich als vorteilhaft erwiesen, dass die Filtercharakteristik des zweiten Geschwindigkeitsfilters 16 der Beziehung

$$\frac{F'}{vK*} = \frac{e + f \cdot s}{1 + g \cdot s + h \cdot s^2}$$

genügt. F' ist in obiger Beziehung das Ausgangssignal des zweiten Geschwindigkeitsfilters. vK* ist das Sollgeschwindigkeitssignal. s ist der Laplace-Operator. e, f, g und h sind Parameter.

In vielen Fällen gilt weiterhin mindestens eine der nachfolgenden Beziehungen. Oftmals gelten sogar alle der nachfolgenden Beziehungen:

$$d = c^2 / 2$$

$$h = g^2 / 2$$

$$g = c$$

$$h = d$$

$$e / f = a / b$$

Das Verzögerungsglied 17 dient dazu, die Dynamik der Ventilsteuereinheit 9 nachzubilden. Auf Grund dieses Umstands wird erreicht, dass das vom Verzögerungsglied 17 ausgegebene Signal mit der Kolbenkraft FK synchronisiert ist. Das Verzögerungsglied 17 kann nach Bedarf ausgebildet sein, sofern es die gewünschte Funktionalität bewirkt. In der Regel ist das Verzögerungsglied 17 als PT2-Glied ausgebildet.

Die Steuereinrichtung 12 ist entsprechend FIG 3 vorzugsweise als softwareprogrammierbare Steuereinrichtung 12 ausgebildet. Die Steuereinrichtung 12 ist daher mittels eines Softwaremoduls 20 programmiert. Das Softwaremodul 20 kann der Steuereinrichtung 12 beispielsweise mittels eines Datenträgers 21 zugeführt werden, auf dem das Softwaremodul 20 in (ausschließlich) maschinenlesbarer Form gespeichert ist. Der Datenträger 21 kann prinzipiell beliebig ausgebildet sein. Dargestellt ist in FIG 3 - rein beispielhaft - eine Ausgestaltung des Datenträgers 21 als USB-Memorystick.

Das Softwaremodul 20 umfasst Maschinencode 22. Der Maschinencode 22 ist von der Steuereinrichtung 12 unmittelbar abarbeitbar. Das Abarbeiten des Maschinencodes 22 durch die Steuereinrichtung 12 bewirkt, dass die Steuereinrichtung 12 die Hydraulikzylindereinheit 1 so steuert, wie dies vorstehend erläutert wurde. Die Programmierung der Steuereinrichtung 12 mit dem Softwaremodul 20 bzw. die Abarbeitung des Maschinencodes 22 durch die Steuereinrichtung 12 bewirkt die entsprechende Ausgestaltung der Steuereinrichtung 12.

Die Erfindung wurde vorstehend in Verbindung mit einer Hydraulikzylindereinheit 1 erläutert, bei welcher die Istposition p und die Sollposition p* und folglich auch das Sollgeschwindigkeitssignal vK* translatorische Größen sind. Auch die Kolbenkraft FK, die Eigenkraft FE und die erwartete Verstellkraft FEV sind translatorische Größen. Die Erfindung ist jedoch ebenso anwendbar, wenn die Positionen p, p* und das Sollgeschwindigkeitssignal vK* rotatorische Größen sind. In diesem Fall sind weiterhin die erwartete Verstellkraft FEV, die Kolbenkraft FK und die Eigenkraft FE durch entsprechende Momente zu ersetzen. Ein Beispiel eines derartigen Falles ist ein sogenannter Dreh-Looper, wie er in Walzwerken verwendet wird.

Es ist weiterhin möglich, dass der in FIG 2 dargestellte Positionsregler 13 entfällt. In diesem Fall wird das Sollgeschwindigkeitssignal vK* anderweitig generiert, beispielsweise zustandsabhängig. Auch ist es möglich, das Sollgeschwindigkeitssignal vK* der Steuereinrichtung 12 von außen vorzugeben.

Die vorliegende Erfindung weist viele Vorteile auf. Insbesondere kann eine hohe Dynamik erreicht werden. Bei Vorhandensein der Linearisierungseinheit 19 ergibt sich die hohe Dynamik sogar über den gesamten Verfahrbereich der Hydraulikzylindereinheit 1. Weiterhin ist die erfindungsgemäße Ausgestaltung der Steuereinrichtung 12 oftmals ohne großen Aufwand bei bestehenden Steuereinrichtungen nachrüstbar. Dies gilt insbesondere, wenn die Steuereinrichtung 12 als softwareprogrammierbare Steuereinrichtung 12 ausgebildet ist.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

**Patentansprüche**

**1.** Steuereinrichtung für eine Hydraulikzylindereinheit (1),

- wobei die Steuereinrichtung ein erstes und ein zweites Geschwindigkeitsfilter (15, 16), einen Kraftregler (14) und ein Verzögerungsglied (17) umfasst,
- wobei mittels des ersten Geschwindigkeitsfilters (15) ein Sollgeschwindigkeitssignal (vK*) zu einem gefilterten Geschwindigkeitssignal (vF) gefiltert wird,
- wobei dem Kraftregler (14) eine erwartete Verstellkraft (FEV), eine von der Hydraulikzylindereinheit (1) auf ein von der Hydraulikzylindereinheit (1) bewegtes mechanisches System (7) ausgeübte Kolbenkraft (FK) und eine durch das mechanische System (7) bewirkte Eigenkraft (FE) zugeführt werden,
- wobei die erwartete Verstellkraft (FEV) dadurch ermittelt wird, dass das Sollgeschwindigkeitssignal (vK*) zunächst mittels des zweiten Geschwindigkeitsfilters (16) gefiltert wird und sodann mittels des Verzögerungsgliedes (17) verzögert wird,
- wobei der Kraftregler (14) anhand der erwarteten Verstellkraft (FEV), der Kolbenkraft (FK) und der Eigenkraft (FE) ein Kraftreglerausgangssignal (vFC) ermittelt,
- wobei das gefilterte Geschwindigkeitssignal (vF) und das Kraftreglerausgangssignal (vFC) zu einem Summensignal (vU) summiert werden,
- wobei das Summensignal (vU) auf eine Ventilsteuereinheit (9) wirkt, mittels derer die Hydraulikzylindereinheit (1) verstellt wird.

**2.** Steuereinrichtung nach Anspruch 1,
**dadurch gekennzeichnet,**
**dass** sie eine Linearisierungseinheit (19) aufweist, mittels derer das Summensignal (vU) vor dem Zuführen zur Ventilsteuereinheit (9) linearisiert wird.

**3.** Steuereinrichtung nach Anspruch 1 oder 2,
**dadurch gekennzeichnet,**
**dass** das Verzögerungsglied (17) als PT2-Glied ausgebildet ist.

**4.** Steuereinrichtung nach Anspruch 1, 2 oder 3,
**dadurch gekennzeichnet,**
**dass** der Kraftregler (14) als Regler mit Differenzialverhalten ausgebildet ist, so dass das Kraftreglerausgangssignal (vFC) im stationären Zustand der Hydraulikzylindereinheit (1) zu Null wird.

**5.** Steuereinrichtung nach einem der obigen Ansprüche,
**dadurch gekennzeichnet,**

**dass** das erste Geschwindigkeitsfilter (15) eine Filtercharakteristik aufweist, die der Beziehung

$$\frac{vF}{vK^*} = \frac{1 + a \cdot s + b \cdot s^2}{1 + c \cdot s + d \cdot s^2}$$

genügt, wobei vF das gefilterte Geschwindigkeitssignal ist, vK* das Sollgeschwindigkeitssignal ist, s der Laplace-Operator ist und a, b, c und d Parameter sind.

6.  Steuereinrichtung nach einem der obigen Ansprüche,
    **dadurch gekennzeichnet,**
    **dass** das zweite Geschwindigkeitsfilter (16) eine Filtercharakteristik aufweist, die der Beziehung

$$\frac{F'}{vK^*} = \frac{e + f \cdot s}{1 + g \cdot s + h \cdot s^2}$$

genügt, wobei F' das Ausgangssignal des zweiten Geschwindigkeitsfilters (16) ist, vK* das Sollgeschwindigkeitssignal ist, s der Laplace-Operator ist und e, f, g und h Parameter sind.

7.  Steuereinrichtung nach einem der obigen Ansprüche,
    **dadurch gekennzeichnet,**
    **dass** das Sollgeschwindigkeitssignal (vK*) eine rotatorische Größe ist und dass die erwartete Verstellkraft (FEV), die Kolbenkraft (FK) und die Eigenkraft (FE) durch entsprechende Momente ersetzt sind.

8.  Steuereinrichtung nach einem der obigen Ansprüche,
    **dadurch gekennzeichnet,**
    **dass** sie einen Positionsregler (13) umfasst, dem eine von der Hydraulikzylindereinheit (1) anzufahrende Sollposition (p*) und eine von der Hydraulikzylindereinheit (1) angefahrene Istposition (p) zugeführt werden und der anhand der Sollposition (p*) und der Istposition (p) das Sollgeschwindigkeitssignal (vK*) ermittelt.

9.  Steuereinrichtung nach Anspruch 8,
    **dadurch gekennzeichnet,**
    **dass** das Sollgeschwindigkeitssignal (vK*) einen Proportionalanteil umfasst, insbesondere ausschließlich den Proportionalanteil aufweist.

10. Steuereinrichtung nach einem der obigen Ansprüche,
    **dadurch gekennzeichnet,**
    **dass** sie als softwareprogrammierbare Steuereinrichtung ausgebildet ist, die mit einem Softwaremodul (20) programmiert ist, dass das Softwaremodul (20) von der Steuereinrichtung unmittelbar abarbeitbaren Maschinencode (22) umfasst und dass die Ausbildung als Steuereinrichtung nach einem der obigen Ansprüche durch das Abarbeiten des Maschinencodes (22) bewirkt wird.

11. Softwaremodul, das Maschinencode (22) umfasst, der von einer an eine Hydraulikzylindereinheit (1) angebundenen softwareprogrammierbaren Steuereinrichtung (12) unmittelbar abarbeitbar ist und dessen Abarbeitung durch die Steuereinrichtung (12) bewirkt, dass die Steuereinrichtung (12) als Steuereinrichtung (12) nach Anspruch 10 ausgebildet wird.

12. Verwendung einer mittels einer Steuereinrichtung (12) nach einem der Ansprüche 1 bis 10 gesteuerten Hydraulikzylindereinheit (1) zur Anstellung eines Schlingenhebers (6) eines Walzwerks an ein Band (5).

13. Verwendung einer Steuereinrichtung (12) nach einem der Ansprüche 1 bis 10 zur Steuerung einer Hydraulikzylindereinheit (1), deren Hublänge (H) größer als deren Kolbendurchmesser (D) ist.

**Claims**

1. Control device for a hydraulic cylinder unit (1),

   - with the control device including a first and second speed filter (15, 16), a force controller (14), and a deceleration element (17),
   - with a setpoint-speed signal (vK*) being filtered by means of the first speed filter (15) to form a filtered speed signal (VF),
   - with the force controller (14) being fed an expected repositioning force (FEV), a piston force (FK) exerted by the hydraulic cylinder unit (1) on a mechanical system (7) moved by the hydraulic cylinder unit (1), and an inherent force (FE) produced by the mechanical system (7),
   - with the expected repositioning force (FEV) being determined by first filtering the setpoint-speed signal (vK*) by means of the second speed filter (16) and thereupon decelerating it by means of the deceleration element (17),
   - with the force controller (14) determining a force-controller output signal (vFC) using the expected repositioning force (FEV), the piston force (FK), and the inherent force (FE),
   - with the filtered speed signal (VF) and force-controller output signal (vFC) being summated into a composite signal (vU),
   - with the composite signal (vU) acting upon a valve control unit (9) by means of which the hydraulic cylinder unit (1) is repositioned.

2. Control device according to claim 1
   **characterised in that**
   it has a linearisation unit (19) by means of which the composite signal (vU) is linearised before being fed to the valve control unit (9).

3. Control device according to claim 1 or 2
   **characterised in that**
   the deceleration element (17) is embodied as a PT2 element.

4. Control device according to claim 1, 2, or 3
   **characterised in that**
   the force controller (14) is embodied as a controller that behaves differentially so that the force-controller output signal (vFC) will become zero in the stationary state of the hydraulic cylinder unit (1).

5. Control device according to one of the above claims
   **characterised in that**
   the first speed filter (15) has a filter characteristic meeting the condition

$$\frac{vF}{vK*} = \frac{1 + a \cdot s + b \cdot s^2}{1 + c \cdot s + d \cdot s^2},$$

   where vF is the filtered speed signal, vK* is the setpoint-speed signal, s is the Laplace operator, and a, b, c, and d are parameters.

6. Control device according to one of the above claims
   **characterised in that**
   the second speed filter (16) has a filter characteristic meeting the condition

$$\frac{F´}{vK*} = \frac{e + f \cdot s}{1 + g \cdot s + h \cdot s^2},$$

   where F' is the output signal of the second speed filter (16), vK* is the setpoint-speed signal, s is the Laplace operator,

and e, f, g, and h are parameters.

7. Control device according to one of the above claims
   **characterised in that**
   the setpoint-speed signal (vK*) is a rotational variable and **in that** the expected repositioning force (FEV), the piston force (FK), and the inherent force (FE) have been replaced with corresponding moments.

8. Control device according to one of the above claims
   **characterised in that**
   it includes a position controller (13) that is fed a setpoint position (p*) to which the hydraulic cylinder unit (1) is to move and an actual position (p) to which the hydraulic cylinder unit (1) has moved and determines the setpoint-speed signal (vK*) using the setpoint position (p*) and actual position (p).

9. Control device according to claim 8
   **characterised in that**
   the setpoint-speed signal (vK*) includes a proportional component, in particular has exclusively the proportional component.

10. Control device according to one of the above claims
    **characterised in that**
    it is embodied as a software-programmable control device that has been programmed by means of a software module (20), **in that** the software module (20) includes machine code (22) that can be processed directly by the control device, and **in that** processing of the machine code (22) is what causes the control device to be embodied according to one of the above claims.

11. Software module that includes machine code (22) that can be processed directly by a software-programmable control device (12) linked to a hydraulic cylinder unit (1) and whose processing by the control device (12) causes the control device (12) to be embodied as a control device (12) according to claim 10.

12. Use of a hydraulic cylinder unit (1), controlled by means of a control device (12) according to one of claims 1 to 10, for bringing a loop lifter (6) of a rolling mill to a strip (5).

13. Use of a control device (12) according to one of claims 1 to 10 for controlling a hydraulic cylinder unit (1) the length of whose stroke (H) exceeds its piston diameter (D).

**Revendications**

1. Dispositif de commande pour une unité de vérin hydraulique (1),

   - dans lequel le dispositif de commande comprend un premier et un deuxième filtre de vitesse (15, 16), un régulateur de force (14) et un organe de temporisation (17),
   - dans lequel au moyen du premier filtre de vitesse (15) un signal de vitesse de consigne (vK*) est filtré pour obtenir un signal de vitesse filtré (vF),
   - dans lequel sont appliquées au régulateur de force (14) une force de réglage attendue (FEV), une force de piston (FK) exercée sur un système mécanique (7) mis en mouvement par l'unité de vérin hydraulique (1) et une force propre (FE) produite par le biais du système mécanique (7),
   - dans lequel la force de réglage attendue (FEV) est déterminée en ce que le signal de vitesse de consigne (vK*) est tout d'abord filtré au moyen du deuxième filtre de vitesse (16) et ensuite temporisé au moyen de l'organe de temporisation (17),
   - dans lequel le régulateur de force (14) détermine à l'aide de la force de réglage attendue (FEV), de la force de piston (FK) et de la force propre (FE) un signal de sortie de régulateur de force (vFC),
   - dans lequel le signal de vitesse filtré (vF) et le signal de sortie de régulateur de force (vFC) sont additionnés pour former un signal cumulé (vU),
   - dans lequel le signal cumulé (vU) agit sur une unité de commande de soupape (9) au moyen de laquelle l'unité de vérin hydraulique (1) est réglée.

2. Dispositif de commande selon la revendication 1,

**caractérisé en ce qu'**
il présente une unité de linéarisation (19), au moyen de laquelle le signal cumulé (vU) est linéarisé avant d'être appliqué à l'unité de commande de soupape (9).

3. Dispositif de commande selon la revendication 1 ou 2,
**caractérisé en ce que**
l'organe de temporisation (17) est configuré en tant qu'organe PT2.

4. Dispositif selon la revendication 1, 2 ou 3,
**caractérisé en ce que**
le régulateur de force (14) est configuré en tant que régulateur avec un comportement différentiel, de sorte que le signal de sortie du régulateur de force (vFC) est égal à zéro à l'état stationnaire de l'unité de vérin hydraulique (1).

5. Dispositif de commande selon l'une des revendications précédentes,
**caractérisé en ce que**
le premier filtre de vitesse (15) présente une caractéristique de filtre, qui suffit à la relation

$$\frac{vF}{vK*} = \frac{1 + a \cdot s + b \cdot s^2}{1 + c \cdot s + d \cdot s^2}$$

dans laquelle vF est le signal de vitesse filtré, vK* est le signal de vitesse de consigne, s est l'opérateur laplacien et a, b, c et d sont des paramètres.

6. Dispositif de commande selon l'une des revendications précédentes,
**caractérisé en ce que**
le deuxième filtre de vitesse (16) présente une caractéristique de filtre, qui suffit à la relation

$$\frac{F'}{vK*} = \frac{e + f \cdot s}{1 + g \cdot s + h \cdot s^2}$$

dans laquelle F' est le signal de sortie du deuxième filtre de vitesse (16), vK* est le signal de vitesse de consigne, s est l'opérateur laplacien et e, f, g et h sont des paramètres.

7. Dispositif de commande selon l'une des revendications précédentes,
**caractérisé en ce que**
le signal de vitesse de consigne (vK*) est une grandeur tournante et **en ce que** la force de réglage attendue (FEV), la force de piston (FK) et la force propre (FE) sont remplacées par des couples correspondants.

8. Dispositif de commande selon l'une des revendications précédentes,
**caractérisé en ce qu'**
il comprend un régulateur de position (13), auquel sont appliquées une position de consigne (p*) à atteindre par l'unité de vérin hydraulique (1) et une position réelle (p) atteinte par l'unité de vérin hydraulique (1) et qui détermine à l'aide de la position de consigne (p*) et de la position réelle (p) le signal de vitesse de consigne (vK*).

9. Dispositif de commande selon la revendication 8,
**caractérisé en ce que**
le signal de vitesse de consigne (vK*) comprend une partie proportionnelle, en particulier présente exclusivement la partie proportionnelle.

10. Dispositif de commande selon l'une des revendications précédentes,
**caractérisé en ce qu'**
il est configuré en tant que dispositif de commande programmable par logiciel, qui est programmé avec un module logiciel (20), **en ce que** le module logiciel (20) comprend des codes machine (22) exécutables directement par le dispositif de commande et **en ce que** la configuration en tant que dispositif de commande est produite selon l'une des revendications précédentes par le biais de l'exécution du code machine (22).

11. Module logiciel, qui comprend le code machine (22), qui est exécutable directement par un dispositif de commande (12) programmable par logiciel relié à une unité de vérin hydraulique (1) et dont l'exécution est produite par le biais du dispositif de commande (12), en ce que le dispositif de commande (12) est configuré en tant que dispositif de commande (12) selon la revendication 10.

12. Utilisation d'une unité de vérin hydraulique (1) commandée au moyen d'un dispositif de commande (12) selon l'une des revendications 1 à 10 en vue de l'emploi d'un releveur de boucles (6) d'un laminoir au niveau d'une bande transporteuse (5).

13. Utilisation d'un dispositif de commande (12) selon l'une des revendications 1 à 10 en vue de la commande d'une unité de vérin hydraulique (1) dont la longueur de course (H) est supérieure à son diamètre de piston (D).

# FIG 1

# FIG 3

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007050892 A1
- DE 102007051857 B3